# EUROPEAN PATENT SPECIFICATION

(11) **EP 3 217 008 B1**
(45) Date of publication and mention of the grant of the patent: **14.07.2021**
(21) Application number: 17159779.2
(22) Date of filing: 08.03.2017
(51) Int. Cl.: F02M 57/02, F02M 59/02, F02F 1/00, F16J 10/04, F04B 39/12

(54) **INJECTION VALVE OF AN INTERNAL COMBUSTION ENGINE**
EINSPRITZVENTIL EINES VERBRENNUNGSMOTORS
SOUPAPE D'INJECTION DE MOTEUR À COMBUSTION INTERNE

(30) Priority: 09.03.2016 DK 201670136
(43) Date of publication of application: 13.09.2017
(73) Proprietor: MAN Energy Solutions, filial af MAN Energy Solutions SE, Tyskland, 2450 Copenhagen SV (DK)
(72) Inventor: FLARUP, Johannes, 2450 Copenhagen SV (DK)
(74) Representative: Dragsted Partners A/S

(56) References cited:
- EP-A1- 2 597 170
- EP-A2- 1 881 191
- WO-A1-95/21994
- WO-A1-2014/048438
- DE-A1- 2 812 418
- DE-A1-102010 061 219
- DE-T2- 60 127 594
- JP-A- S5 342 148
- JP-A- 2011 174 424
- US-A1- 2012 318 228
- US-A1- 2015 047 498

## Description

### Field of the invention

The present invention relates to an injection valve for being in contact with an abrasive fluid. The invention further relates to an internal combustion engine comprising the injection valve. The present invention finally relates to a method of manufacturing the injection valve according to the invention.

### Background art

Internal combustion engines use cylinders, e.g. in US5566450, in which pistons move, e.g. in the combustion cylinder but also in pumps and valves or other injection units. When operating abrasive fluid, such as fuel comprising coal particles, or fluids with poor lubricity such as methanol, the cylinders and the pistons are very quickly worn out and need repair, if not replacement. Therefore, development of materials capable of withstanding such abrasive materials has increased over the last years in order to increase the lifetime of the cylinders and the pistons operating therein. An injection valve is known from DE60127594 T2.

However, even nowadays, such materials are not capable of withstanding the abrasive fluid, which has resulted in an increased need for hardening or coating the inner face of the cylinders and the pistons. However, such processes have proven impossible to perform when the cylinders are longer than they are wide, and therefore, there is a need to develop another solution to increase the wear resistance of the cylinders and the pistons operating therein.

### Summary of the invention

It is an object of the present invention to wholly or partly overcome the above disadvantages and drawbacks of the prior art. More specifically, it is an object to provide an improved injection valve having a cylinder and a piston operating therein which are capable of withstanding operating with abrasive fluid, such as fuel comprising coal particles, for a longer period than the known solutions.

The above objects, together with numerous other objects, advantages, and features, which will become evident from the below description, are accomplished by a solution in accordance with the present invention by an injection valve for being in contact with an abrasive fluid according to claim 1.

In one embodiment, the liner length may be longer than the inner cylinder diameter.

In another embodiment, the liner length may be equal to or less than twice the length of the first inner liner diameter.

The first inner liner diameter mentioned above may substantially correspond to the outer piston diameter.

In yet another embodiment, the inner diameter of the tubular liner may vary along the liner length.

Also, the inner liner diameter of the tubular liner may have a first inner liner diameter being larger than a second inner liner diameter along the liner length.

The injection valve described above further comprises a second tubular liner arranged in succession of the first tubular liner along the cylinder length.

Moreover, the injection valve may comprise a plurality of tubular liners arranged in succession of each other.

In addition, the liner length(s) may be equal to the cylinder length.

Moreover, the first tubular liner may have a first end and a second end, and at least the second end may be chamfered towards the inner liner face.

In addition, the second tubular liner may have a first end and a second end, and at least the first end may be chamfered towards the inner liner face.

The second end of the first tubular liner may be arranged opposite the first end of the second tubular liner.

In one embodiment, the inner cylinder diameter may be less than 1 metre, preferably less than 0.5 metre, more preferably less than 0.1 metre.

In another embodiment, the inner liner diameter may be less than 1 metre, preferably less than 0.5 metre, more preferably less than 0.1 metre.

In yet another embodiment, the first tubular liner and the second tubular liner may have different liner lengths.

The first tubular liner and the second tubular liner mentioned above may have equal liner lengths.

The injection valve according to the invention may further comprise a lubrication channel in the cylinder wall, extending towards the piston and configured to provide lubrication fluid or sealing oil to the piston.

The lubrication channel described above may have an outlet facing the outer piston face.

Also, the inner face of the tubular liner may be provided with an annular channel.

Furthermore, the outlet may be in the annular groove.

Additionally, the first tubular liner and the second tubular liner may be arranged with a mutual distance, thereby providing an annular channel between the ends of the tubular liners.

Further, the outlet may be in the annular channel.

In one embodiment, the second tubular liner may have a second inner liner diameter smaller than the first inner liner diameter.

The second inner liner diameter mentioned above may be 1 mm smaller than the first inner liner diameter, preferably 100 µm smaller than the first inner liner diameter, and even more preferably 50 µm smaller than the first inner liner diameter.

Furthermore, the coating may comprise diamond-like carbon, silicon dioxide (SiO₂), graphite or graphene.

In one embodiment, the coating may have a hardness higher than 1000 HV.

In another embodiment, the coating may have a coating thickness.

In yet another embodiment, the coating thickness may be 1-20 µm, and preferably 2-10 µm.

The coating thickness may be uniform along the liner length(s).

Also, the tubular liner may be made of metal.

In addition, the first tubular liner and the cylinder may be shrink-fitted together.

Moreover, the abrasive fluid may be a gas or a liquid or a combination thereof.

The abrasive fluid may comprise particles, which is the case if coal slurry is the medium. Fluids with low lubricity can be methanol, gasoline, Liquefied Petroleum Gas (LPG), or dimethyl ether (DME) media with low lubricity.

The invention also relates to an injection valve comprising an engine device according to the invention.

The invention further relates to an internal combustion engine comprising the injection valve described above.

Finally, the present invention relates to a method of manufacturing the injection valve according to the invention of any of claims 1-7, comprising the steps of:
- providing the cylinder, the piston and the first tubular liner,
- coating the inner liner face of the first tubular liner,
- arranging the first tubular liner in the cylinder,
- fastening the first tubular liner in the cylinder by shrink-fitting, and
- arranging the piston at least partly within the cylinder.

Furthermore, the piston may be partly arranged in the first tubular liner.

The method described above may further comprise the steps of:
- providing a second tubular liner,
- coating the inner liner face of the second tubular liner, and
- arranging the second tubular liner before the step of fastening the first tubular liner in the cylinder.

Also, the method may comprise the step of polishing the inner liner faces comprising coating.

The method mentioned above may further comprise the step of grinding the inner liner faces comprising coating.

Additionally, the method may comprise the step of chamfering the ends of the tubular liners before coating the inner liner faces.

Finally, the method may comprise the step of providing an annular groove in one of the tubular liners.

### Brief description of the drawings

The invention and its many advantages will be described in more detail below with reference to the accompanying schematic drawings, which for the purpose of illustration show some non-limiting embodiments and in which
Fig. 1 shows a cross-sectional view of an injection valve,
Fig. 2 shows a cross-sectional view of another injection valve,
Fig. 3 shows a cross-sectional view of part of the injection valve, and
Fig. 4 shows a cross-sectional view of part of an injection unit of an internal combustion engine.

All the figures are highly schematic and not necessarily to scale, and they show only those parts which are necessary in order to elucidate the invention, other parts being omitted or merely suggested.

### Detailed description of the invention

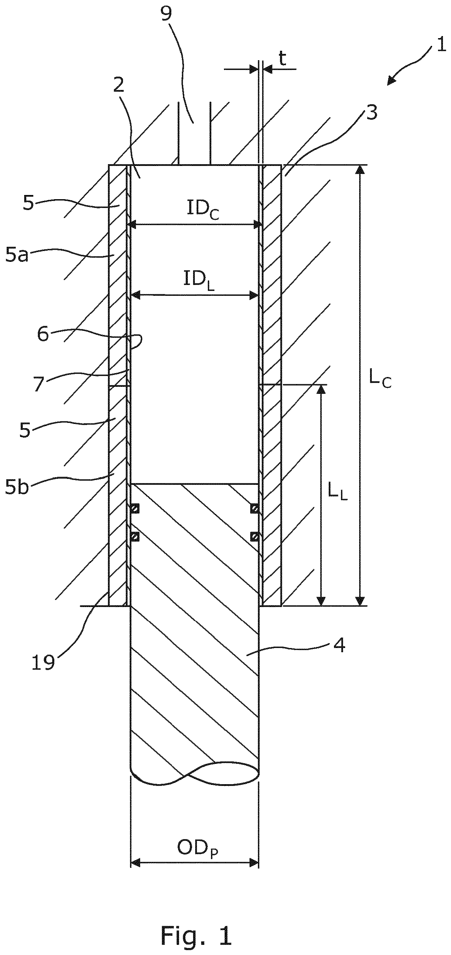

Fig. 1 shows an injection valve 1 for being in contact with an abrasive fluid, such as fuel comprising coal particles, heavy fuel or methane, etc. The injection valve 1 comprises a cylinder 2 having a cylinder length L_{c}, an inner cylinder diameter ID_{c} and a cylinder wall 3. The injection valve 1 comprises a piston 4 having an outer piston diameter OD_{P} and being movable in the cylinder 2. The injection valve 1 further comprises a first tubular liner 5, 5a arranged between the cylinder wall 3 and the piston 4, so that the piston 4 moves, at least partly, within the first tubular liner 5, 5a. The first tubular liner 5, 5a has a liner length L_{L} longer than the inner cylinder diameter ID_{c} and an inner liner diameter ID_{L}. The first tubular liner 5, 5a has an inner face 6 comprising a coating 7.

When coating an inner surface, it is very difficult to coat the entire length of the cylinder 2 and obtain an even layer when the cylinder 2 is larger than the inner cylinder diameter ID_{c}. Furthermore, the thickest layer will be closest to the end of the cylinder 2 while the thinner layer will be closer to the bottom of the cylinder 2, and such imprecisions in dimensions are not acceptable in an internal combustion engine. When having a tubular liner 5, 5a, 5b, the tubular liner 5, 5a, 5b can be coated from both ends, resulting in an even coating layer which is within the dimension variations acceptable within the field of internal combustion engines. After being coated, the tubular liner 5, 5a, 5b is inserted into the cylinder 2, resulting in a cylinder 2 having a surface resistant to wear when handling abrasive fluids.

In Fig. 1, the injection valve 1 comprises both a first tubular liner 5, 5a and a second tubular liner 5, 5b. Both tubular liners 5, 5a, 5b are coated before being inserted into the cylinder 2 and are arranged end-to-end in succession of each other along the cylinder length L_{c}. The liner lengths L_{L} of the first and second tubular liners 5, 5a, 5b are approximately the same in Fig. 1, but in another embodiment, the liner length L_{L} of one tubular liner 5, 5a, 5b may be longer than the liner length L_{L} of another tubular liner 5, 5a, 5b. The difference between the inner cylinder diameter ID_{c} and the inner liner diameter ID_{L} is twice the coating thickness t. The piston 4 is movable along the coating 7 of the tubular liners 5, 5a, 5b in the cylinder 2 to eject fluid out of an opening 9.

By the present coating processes, it is possible to coat a maximum length inside a cylinder being no longer than the inner cylinder diameter ID_{c} when coating from one end. The liner length L_{L} is therefore equal to or less than twice the inner liner diameter ID_{L} because the tubular liner 5, 5a, 5b can be coated from both ends. The inner cylinder diameter ID_{c} is less than 1 metre, preferably less than 0.5 metre, and more preferably less than 0.1 metre, and the inner liner diameter ID_{L} is also less than 1 metre, preferably less than 0.5 metre, and more preferably less than 0.1 metre.

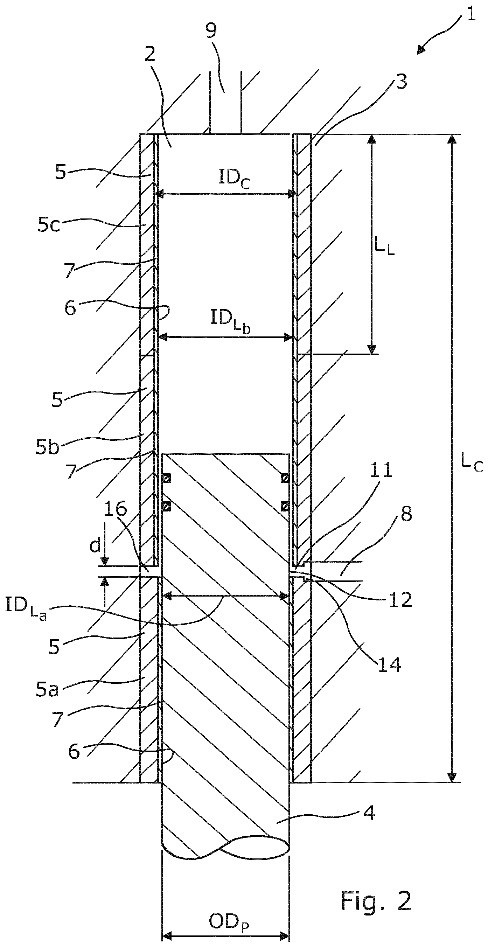

In Fig. 2, the injection valve 1 further comprises a lubrication channel 8 in the cylinder wall 3, extending towards the piston 4 and configured to provide lubrication fluid to the piston 4. Thus, the lubrication channel 8 has an outlet 11 facing an outer piston face 12. The second tubular liner 5, 5b has a second inner liner diameter ID_{Lb} smaller than the first inner liner diameter ID_{La}, ID_{L}. The first inner liner diameter ID_{La}, ID_{L} substantially corresponds to the outer piston diameter OD_{P}. The inner face 6 of the first tubular liner 5, 5a contacts the outer piston face 12 of the piston 4 and controls the sideways/radial movement of the piston 4 in and out of the cylinder 2. Due to the fact that the second tubular liner 5, 5b has a second inner liner diameter ID_{Lb} smaller than the first inner liner diameter ID_{La}, ID_{L}, there is a gap between the inner face 6 of the second tubular liner 5b, 5 and the outer piston face 12. This gap transports the lubrication fluid from the lubrication channel 8 along the piston 4 towards the opening 9 and ensures that the abrasive fluid in the cylinder 2 does not enter between the outer piston face 12 of the piston 4 and the inner face 6 of the first tubular liner 5, 5a. The gap is smaller than 1 mm, preferably smaller than 100 pm, and even preferably smaller than 50 µm. By keeping a higher pressure in the lubrication fluid than in the abrasive fluid in the cylinder 2, the abrasive fluid does not enter between the first tubular liner 5, 5a and the piston 4, and the wear on the cylinder 2 and the piston 4 is substantially decreased since the abrasive fluid is no longer squeezed in between the piston 4 and the cylinder wall 3. As can be seen, the first tubular liner 5, 5a and the second tubular liner 5, 5b are arranged in succession, but with a distance d therebetween. Hereby, the first and the second tubular liners 5, 5a, 5b form an annular channel 16 in fluid communication with the lubrication channel 8, and the lubrication fluid can thus be distributed along the annular channel 16 extending all around the piston 4. A recess 14 or annular groove (not shown) in an outer face 19 of the first and second tubular liners 5, 5a, 5b has been formed for distributing the lubrication fluid better before being ejected through the outlet 11. Thus, the outlet 11 is in the annular channel 16. As shown in Fig. 2, the injection valve 1 may also comprise a third tubular liner 5, 5c, so that the cylinder is lined with three tubular liners 5, 5a, 5b, 5c.

In Figs. 1 and 2, the total liner length being an addition of each liner length L_{L} is equal to the cylinder length L_{c}. The coating thickness t is uniform along the liner length L_{L}, and the coating thickness t is less than 1 mm, preferably less than 100 µm. The tubular liners 5, 5a, 5b are preferably made of metal. The coating 7 comprises diamond-like carbon, silicon dioxide (SiO₂), graphite, such as graphene, or similar coating material. The coating 7 has a shore hardness higher than 1000 HV.

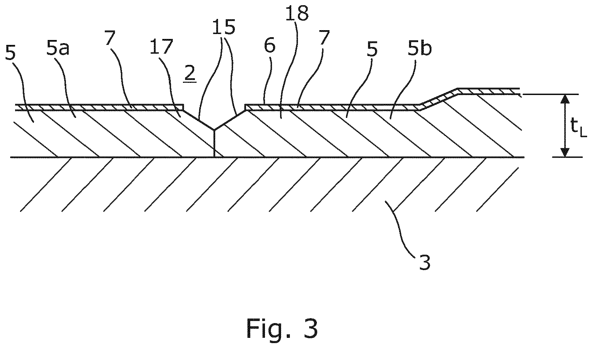

In order to even out a very small variation in the inner liner diameter ID_{L} of two tubular liners 5, 5a, 5b, a first end 17 of the first tubular liner 5, 5a and a second end 18 of the second tubular liner 5, 5b may be chamfered, resulting in a tapering end 15, as shown in Fig. 3. The inner liner diameter ID_{L} of a tubular liner 5 may vary along the liner length L_{L} so that the inner liner diameter ID_{L} of the tubular liner 5 has a first inner liner diameter ID_{La} which is larger than a second inner liner diameter ID_{Lb} along the liner length L_{L}, resulting in an increasing thickness t_{L}, as shown in Fig. 3.

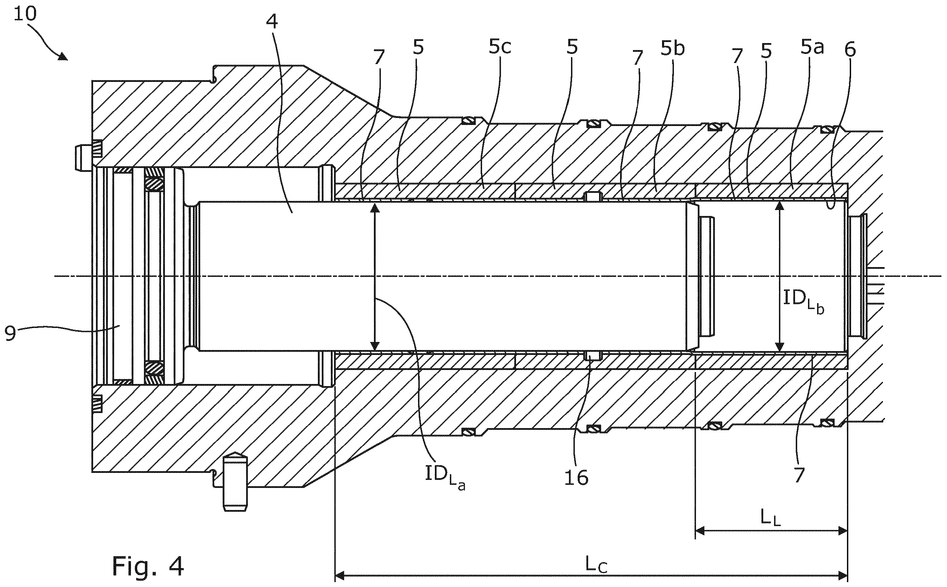

Fig. 4 shows part of an injection unit of an internal combustion engine 100 comprising the injection valve 10, where the cylinder 2 and the piston 4 form part of an intensifier (not shown). The first tubular liner 5, 5a has an inner diameter ID_{Lb} slightly larger than the inner diameter ID_{La} of the second and third tubular liners 5, 5b, 5c, and the second tubular liner 5b has the annular channel 16 for providing lubrication fluid to the injection unit.

The injection valve 1, 10 is manufactured by first providing a cylinder 2, a piston 4 and a first tubular liner 5, 5a, then coating the inner liner face 6 of the first tubular liner 5, 5a forming the coating 7, and finally arranging the first tubular liner 5, 5a in the cylinder 2. The first tubular liner 5, 5a is fastened in the cylinder 2 by shrink-fitting, and subsequently, the piston 4 is at least partly arranged within the cylinder 2 and thus within the first tubular liner 5, 5a. If the cylinder 2 comprises a second tubular liner 5, 5b, the second tubular liner 5, 5b is arranged in succession of the first tubular liner 5, 5a before the step of fastening the first tubular liner 5, 5a, and before the piston 4 is arranged in the cylinder 2, both liners 5a, 5b, 5 are fastened to the cylinder 2. The inner liner faces 6 comprising coating 7 may be polished and/or ground before the piston 4 is arranged in the cylinder 2.

The fluid is a liquid. The fluid is any kind of fluid in an internal combustion engine, such as heavy fuel, fuel containing particles, such as coal particles, liquefied gas, such as Liquefied Petroleum Gas (LPG), dimethyl ether (DME), gasoline or other liquids with abrasive particles or just liquids with poor lubricity.

Although the invention has been described in the above in connection with preferred embodiments of the invention, it will be evident for a person skilled in the art that several modifications are conceivable without departing from the invention as defined by the following claims.

## Claims

1. An injection valve (1, 10) for being in contact with an abrasive fluid, the injection valve (1, 10) comprising:
- a cylinder (2) having a cylinder length (L_{c}), an inner cylinder diameter (ID_{c}) and a cylinder wall (3), and
- a piston (4) having an outer piston diameter (OD_{P}) and an outer piston face (12), the piston (4) being movable in the cylinder (2),
wherein a first tubular liner (5, 5a) is arranged between the cylinder wall (3) and the piston (4) so that the piston (4) moves, at least partly, within the first tubular liner (5, 5a), the first tubular liner (5, 5a) having a liner length (L_{L}), a first inner liner diameter (ID_{L}) and an inner liner face (6), the inner liner face (6) comprising a coating (7), **characterised in that** the injection valve (1, 10) further comprises a second tubular liner (5, 5b) arranged in succession of the first tubular liner (5a, 5) along the cylinder length (L_{c}), said second tubular liner is also coated.

2. An injection valve (1, 10) according to claim 1, wherein the liner length (L_{L}) is longer than the inner cylinder diameter (ID_{c}).

3. An injection valve (1, 10) according to claim 1, wherein the liner length (L_{L}) is equal to or less than twice the first inner liner diameter (ID_{L}).

4. An injection valve (1, 10) according to claim 1, wherein the second tubular liner (5, 5b) has a second inner liner diameter (ID_{Lb}) larger than the first inner liner diameter (ID_{L}).

5. An injection valve (1, 10) according to any of claims 1-4, wherein the injection valve (1, 10) further comprises a lubrication channel (8) in the cylinder wall (3), extending towards the piston (4) and configured to provide lubrication fluid or sealing oil to the piston (4).

6. An injection valve (1, 10) according to any of claims 1-5, wherein the coating (7) comprises diamond-like carbon, silicon dioxide (SiO₂), graphite or graphene.

7. An injection valve (1, 10) according to any of claims 1-6, wherein the tubular liner has a first inner liner diameter being larger than a second inner liner diameter along the liner length.

8. An internal combustion engine (100) comprising the injection valve (1, 10) according to any of claims 1-7.

9. A method of manufacturing the injection valve (1, 10) according to any of claims 1-7, comprising the steps of:
- providing the cylinder (2), the piston (4) and the first tubular liner (5, 5a),
- coating the inner liner face (6) of the first tubular liner (5, 5a),
- arranging the first tubular liner (5, 5a) in the cylinder (2),
- fastening the first tubular liner (5, 5a) in the cylinder (2) by shrink-fitting, and
- arranging the piston (4) at least partly within the cylinder (2).

## Patentansprüche

1. Einspritzventil (1, 10) zum in Berührung sein mit einem abrasiven Fluid, wobei das Einspritzventil (1, 10) aufweist:
- einen Zylinder (2) mit einer Zylinderlänge (L_{c}), einem Zylinderinnendurchmesser (ID_{c}) und einer Zylinderwand (3), und
- einen Kolben (4) mit einem Kolbenaußendurchmesser (OD_{P}) und einer Kolbenaußenseite (12), wobei der Kolben (4) in dem Zylinder (2) beweglich ist,
wobei eine erste rohrförmige Buchse (5, 5a) zwischen der Zylinderwand (3) und dem Kolben (4) angeordnet ist, so dass der Kolben (4) sich zumindest teilweise innerhalb der ersten rohrförmigen Buchse (5, 5a) bewegt, wobei die erste rohrförmige Buchse (5, 5a) eine Buchsenlänge (L_{L}), einen ersten Buchseninnendurchmesser (ID_{L}) und eine Buchseninnenseite (6) aufweist, wobei die Buchseninnenseite (6) eine Beschichtung (7) aufweist, **dadurch gekennzeichnet, dass** das Einspritzventil (1, 10) weiterhin eine zweite rohrförmige Buchse (5, 5b) aufweist, die entlang der Zylinderlänge (Lc) auf die erste rohrförmige Buchse (5a, 5) folgend angeordnet ist, wobei die zweite rohrförmige Buchse ebenfalls beschichtet ist.

2. Einspritzventil (1, 10) nach Anspruch 1, wobei die Buchsenlänge (L_{L}) länger ist als der Zylinderinnendurchmesser (ID_{c}).

3. Einspritzventil (1, 10) nach Anspruch 1, wobei die Buchsenlänge (L_{L}) gleich oder kleiner als zweimal der erste Buchseninnendurchmesser (ID_{L}) ist.

4. Einspritzventil (1, 10) nach Anspruch 1, wobei die zweite rohrförmige Buchse (5, 5b) einen zweiten Buchseninnendurchmesser (ID_{LB}) aufweist, der größer ist als der erste Buchseninnendurchmesser (ID_{L}).

5. Einspritzventil (1, 10) nach irgendeinem der Ansprüche 1-4, wobei das Einspritzventil (1, 10) weiterhin einen Schmierungskanal (8) in der Zylinderwand (3) aufweist, der sich zu dem Kolben (4) hin erstreckt und dazu ausgebildet ist, ein Schmierfluid oder Dichtungsöl an den Kolben (4) bereitzustellen.

6. Einspritzventil (1, 10) nach irgendeinem der Ansprüche 1-5, wobei die Beschichtung (7) diamantartigen Kohlenstoff, Siliziumdioxid (SiO₂), Graphit oder Graphen aufweist.

7. Einspritzventil (1, 10) nach irgendeinem der Ansprüche 1-6, wobei die rohrförmige Buchse entlang der Buchsenlänge einen ersten Buchseninnendurchmesser aufweist, der größer ist als ein zweiter Buchseninnendurchmesser.

8. Verbrennungsmotor (100) mit dem Einspritzventil (1, 10) gemäß irgendeinem der Ansprüche 1-7.

9. Verfahren zum Herstellen des Einspritzventils (1, 10) gemäß irgendeinem der Ansprüche 1-7, mit den Schritten:
- Bereitstellen des Zylinders (2), des Kolbens (4) und der ersten rohrförmigen Buchse (5, 5a),
- Beschichten der Buchseninnenseite (6) der ersten rohrförmigen Buchse (5, 5a),
- Anordnen der ersten rohrförmigen Buchse (5, 5a) in dem Zylinder (2),
- Befestigen der ersten rohrförmigen Buchse (5, 5a) in dem Zylinder (2) durch Aufschrumpfen, und
- Anordnen des Kolbens (4) zumindest teilweise innerhalb des Zylinders (2).

## Revendications

1. Soupape d'injection (1, 10) destinée à être en contact avec un fluide abrasif, la soupape d'injection (1, 10) comprenant :
- un cylindre (2) présentant une longueur de cylindre (Le), un diamètre de cylindre intérieur (ID_{c}) et une paroi de cylindre (3), et
- un piston (4) présentant un diamètre de piston extérieur (OD_{P}) et une face de piston extérieure (12), le piston (4) étant mobile dans le cylindre (2),
dans laquelle une première doublure tubulaire (5, 5a) est disposée entre la paroi de cylindre (3) et le piston (4) de sorte que le piston (4) se déplace, au moins partiellement, à l'intérieur de la première doublure tubulaire (5, 5a), la première doublure tubulaire (5, 5a) présentant une longueur de doublure (L_{L}), un premier diamètre de doublure intérieur (ID_{L}) et une face de doublure intérieure (6), la face de doublure intérieure (6) comprenant un revêtement (7), **caractérisée en ce que** la soupape d'injection (1, 10) comprend en outre une seconde doublure tubulaire (5, 5b) disposée à la suite de la première doublure tubulaire (5a, 5) le long de la longueur de cylindre (L_{c}), ladite seconde doublure tubulaire est également revêtue.

2. Soupape d'injection (1, 10) selon la revendication 1, dans laquelle la longueur de doublure (L_{L}) est plus longue que le diamètre de cylindre intérieur (ID_{c}).

3. Soupape d'injection (1, 10) selon la revendication 1, dans laquelle la longueur de doublure (L_{L}) est égale ou inférieure à deux fois le premier diamètre de doublure intérieur (ID_{L}).

4. Soupape d'injection (1, 10) selon la revendication 1, dans laquelle la seconde doublure tubulaire (5, 5b) présente un second diamètre de doublure intérieur (ID_{Lb}) plus grand que le premier diamètre de doublure intérieur (ID_{L}).

5. Soupape d'injection (1, 10) selon l'une quelconque des revendications 1-4, dans laquelle la soupape d'injection (1, 10) comprend en outre un canal de lubrification (8) dans la paroi de cylindre (3), s'étendant vers le piston (4) et configuré pour fournir un fluide de lubrification ou une huile d'étanchéité au piston (4).

6. Soupape d'injection (1, 10) selon l'une quelconque des revendications 1-5, dans laquelle le revêtement (7) comprend du carbone de type diamant, du dioxyde de silicium (SiO₂), du graphite ou du graphène.

7. Soupape d'injection (1, 10) selon l'une quelconque des revendications 1-6, dans laquelle la doublure tubulaire présente un premier diamètre de doublure intérieur étant plus grand qu'un second diamètre de doublure intérieur le long de la longueur de doublure.

8. Moteur à combustion interne (100) comprenant la soupape d'injection (1, 10) selon l'une quelconque des revendications 1-7.

9. Procédé de fabrication de la soupape d'injection (1, 10) selon l'une quelconque des revendications 1-7, comprenant les étapes consistant à :
- fournir le cylindre (2), le piston (4) et la première doublure tubulaire (5, 5a),
- revêtir la face de doublure intérieure (6) de la première doublure tubulaire (5, 5a),
- disposer la première doublure tubulaire (5, 5a) dans le cylindre (2),
- fixer la première doublure tubulaire (5, 5a) dans le cylindre (2) par frettage, et
- disposer le piston (4) au moins partiellement à l'intérieur du cylindre (2).
